# EUROPEAN PATENT APPLICATION

(11) **EP 1 313 274 A2**
(43) Date of publication of application: **21.05.2003**
(21) Application number: 02025760.6
(22) Date of filing: 15.11.2002
(51) Int. Cl.: H04L 12/56

(54) **Packet transmission apparatus and packet transmission processing method**

(30) Priority: 19.11.2001 JP 2001352737
(71) Applicant: MATSUSHITA ELECTRIC INDUSTRIAL CO., LTD., Kadoma-shi, Osaka-fu (JP)
(72) Inventor: Gotoh, Hiroki, Kadoma-shi, Osaka-fu 571-0071 (JP); Shimazu, Mikio, Kasuya-gun, Fukuoka-ken 811-2311 (JP); Sakai, Akira, Yokohama-shi 240-0042 (JP)
(74) Representative: Gassner, Wolfgang, Dr.

(57) **Abstract**

In a packet transmission apparatus (24), an identifier assigning section (214) assigns one of first to third priority identifiers to a currently-received packet (Pb), and passes the packet to a packet transmitting section (28) as a packet Pc. The packet transmitting section (28) performs a necessary process on the received packet (Pc), and outputs the processed packet to an interconnection link (4) as a packet (Pd). Thus, the packet transmission apparatus (24) can perform priority control with excellent transmission quality while assuring a contracted bandwidth.

## Description

### BACKGROUND OF THE INVENTION

### Field of the Invention

This invention relates to packet transmission apparatuses and packet transmission processing methods, and more particularly, to packet transmission apparatuses and packet transmission processing methods that enable priority control and bandwidth control for packets.

### Description of the Background Art

In recent years, distribution of moving images or bi-directional communications of video via the Internet has become prevalent. Real time communications such as the distribution of moving images and bi-directional communications of video are sensitive to packet delays and delay jitter between the transmitting end and the receiving end. Thus, it is necessary to perform traffic priority control in order to carry out real time communications via networks such as the Internet. An example of traffic priority control is Diffserv (Differentiated Service) described in RFC 2475 of the IETF (Internet Engineering Task Force) . In Diffserv, packets are classified by MFC (Multi Field Classifier) when they enter a network, and a DSCP (Differentiated Service Code Point) is set in a header of each classified packet. Then, each packet is transferred over the network based on the forwarding behavior associated with the DSCP.

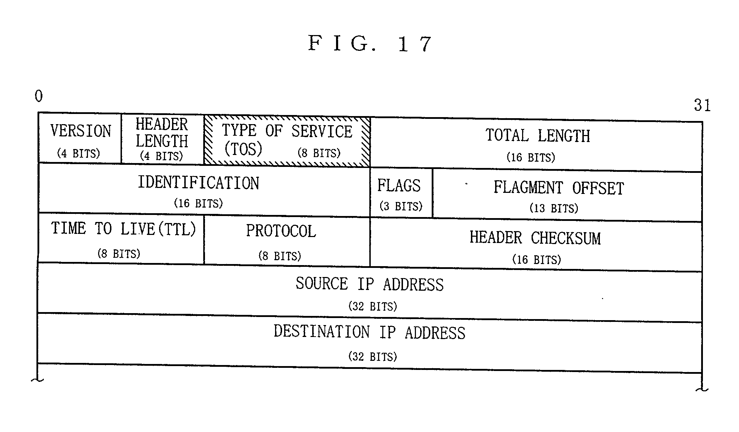

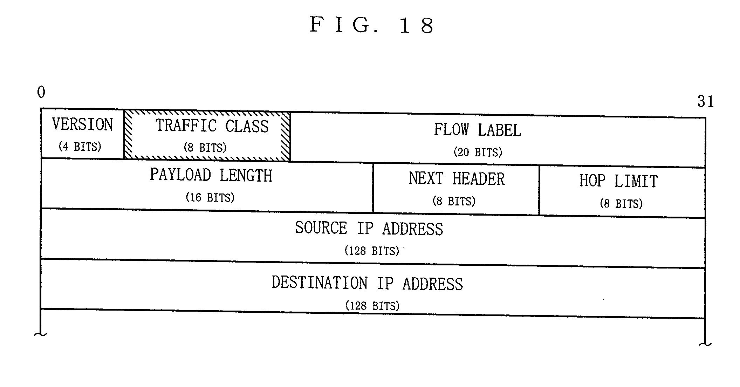

FIG. 17 is a schematic diagram illustrating the header format of IPv4 (Internet Protocol Version 4), and FIG. 18 is a schematic diagram illustrating the header format of IPv6 (Internet Protocol Version 6). The DSCP redefines the TOS field shown in FIG. 17, and the traffic class field shown in FIG. 18 (see the hatched portions shown in both figures).

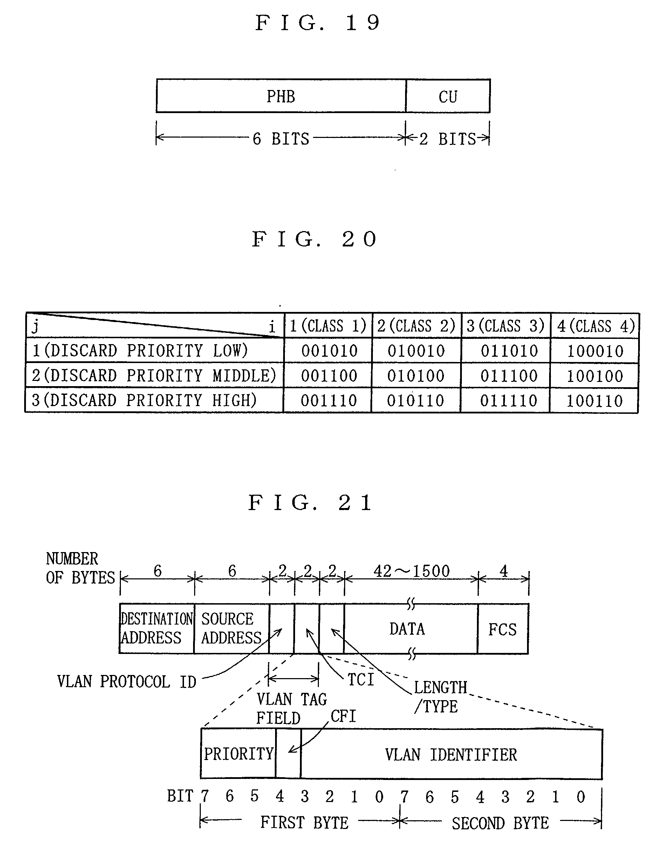

FIG. 19 is a schematic diagram illustrating the structure of the DSCP. In FIG. 19, the DSCP contains 8 bits, among which the first 6 bits are used to represent a PHB (Per Hop Behavior), i.e., a forwarding operation, and the other 2 bits are CU (Currently Unused), i.e., undefined. PHBs are classified into the following three classes: a BE (Best Effort) class (000000), an EF (Expedited Forwarding) class (101110), and an AF (Assured Forwarding) class. Generally, the PHBs classified in the BE class are used for uncontrolled services; the PHBs classified in the EF classes for services which require smaller packet delays and delay jitter (for example, virtual leased line services) ; and the PHBs classified in the AF classes for services which guarantee a minimum bandwidth through statistical multiplexing. In the AF class, four classes and three levels of discard priorities are currently defined, and the order of IP packets within the same AF class is guaranteed. FIG. 20 is a table showing values of a recommended AF-class PHB. As shown in the row direction of FIG. 20, priorities are classified into four classes, among which class 1 has the highest priority. Similarly, the column direction of FIG. 20 represents three levels of discard priorities. Packets having discard priority 1 are most unlikely to be discarded.

According to Diffserv as described above, a packet switch can process a given packet with a higher level of priority by setting a DSCP so as to give priority to the forwarding of the real time traffic.

Furthermore, IEEE (Institute of Electrical and Electronics Engineers) 802. 1Q/p describes definitions of packets that need to be treated with priority in a datalink layer. FIG. 21 is a schematic diagram illustrating the structures of an Ethernet frame and a tag control information field thereof as defined under IEEE 802. 1Q/p. In FIG. 21, the Ethernet frame includes a VLAN tag, in which a tag control information (TCI) field is included. The most significant 3 bits of this field are used for representing a priority level, thereby enabling the Ethernet frame to have one of eight different levels of priorities.

Each packet assigned with a priority as described above is generally forwarded through the network in accordance with PQ (Priority Queuing). Specifically, according to PQ, a number of queues corresponding to different levels of priority are provided in a packet switch. Each packet which arrives at the packet switch is stored in a queue corresponding to its priority level. Then, according to a predetermined timing, the packet switch selects the highest priority queue that includes a packet therein, and fetches the packet therefrom so as to be sent over the network.

Furthermore, when traffic streams from a plurality of users are multiplexed to one link, an assured bandwidth which is available to each user is set. To ensure that the above-described assured bandwidth is actually available to each user, bandwidth control is required. In performing bandwidth control, WRR (Weighted Round Robin) or WFQ (Weighted Fair Queuing) are generally used. WRR is a round-robin service scheme in which a queue is provided to each session; a weighting parameter proportionate to the required bandwidth is assigned to the session queue; and a plurality of session queues are sequentially selected based on their weighting parameters. WRR has an advantage in terms of fairness because it is based on a round-robin service. On the other hand, WFQ is a bit-by-bit round-robin service scheme in which each received packet is assigned with a tag indicating a time to lapse before completion of the service such that packets having smaller tags are outputted first. WFQ has an advantage in terms of fairness and bandwidth utilization.

Furthermore, besides the priority control and bandwidth control described above, EP 1 058 424 A2 discloses a bandwidth monitoring device for effectively utilizing remaining bandwidth. The disclosed bandwidth monitoring device is installed in a router accommodated in a network. In the bandwidth monitoring device, a monitoring result determination section determines whether the bandwidth of a priority packet is narrower than the contracted bandwidth or not. When it is determined that the bandwidth of the priority packet is narrower than the contracted bandwidth, a DSCP determination section transmits a non-priority packet as a priority packet, thus utilizing the remaining bandwidth for transmission of non-priority packets. As a result, it is possible to effectively utilize the contracted bandwidth.

However, in accordance with the conventional bandwidth monitoring device, the DSCP determination section may set a value representing a priority packet in the priority field of a non-priority packet. Therefore, a bandwidth monitoring device installed in any subsequent router in the network cannot determine whether the received priority packet has always been a priority packet, or it has been converted into a priority packet by the router by which the packet was transmitted. That is, each packet may lose its original priority. If traffic congestion occurs in the subsequent router, the router cannot perform priority control based on the original priority of each packet. Specifically, when a packet that was originally a non-priority packet is transmitted as a priority packet, another packet that was originally a priority packet may have a delayed arrival at the receiving end, or delay jitter may result, thereby causing degradation in transmission quality.

### SUMMARY OF THE INVENTION

Therefore, an object of the present invention is to provide a packet transmission apparatus which performs priority control with excellent transmission quality while assuring a contracted bandwidth.

In order to attain the object mentioned above, a first aspect of the present invention is directed to a packet transmission apparatus for performing a predetermined process on packets transferred over a plurality of input links, and outputting the packets to an output link, comprising: an identifier assigning section for, after receiving a packet transferred over each input link, assigning one of first to third identifiers to the received packet, wherein the first identifier indicates that the packet has a relatively high priority and does not exceed an assured bandwidth determined with a predetermined method, the second identifier indicates that the packet has a relatively low priority and does not exceed the assured bandwidth, and the third identifier at least indicates that the packet exceeds the assured bandwidth, the packet transmission apparatus further comprising: a packet transmitting section for performing a necessary process on the packet assigned with one of the first to third identifiers by the identifier assigning section, and outputting the processed packet to the output link.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a schematic diagram illustrating an exemplary structure of a network system 1 for apartment buildings according to a first embodiment of the present invention;
FIG. 2 is a block diagram showing the structure of each home GW 22 shown in FIG. 1;
FIG. 3 is a schematic diagram for illustrating a token bucket meter method used in a bandwidth monitoring section 213 shown in FIG. 2;
FIG. 4 is a flowchart illustrating a process performed by an identifier assigning section 214 shown in FIG. 2;
FIG. 5 is a block diagram illustrating the structure of each intra-building GW 3 shown in FIG. 1;
FIG. 6 is a block diagram illustrating the structure of each inter-building GW 5 shown in FIG. 1;
FIG. 7 is a block diagram illustrating an exemplary structure of a network system 11 for apartment buildings according to a second embodiment of the present invention;
FIG. 8 is a block diagram illustrating the detailed structure of a home GW 122 shown in FIG. 7;
FIG. 9 is a flowchart illustrating a process performed by an identifier assigning section 14 shown in FIG. 8;
FIG. 10 is a block diagram illustrating the structure of each inter-building GW 13 shown in FIG. 7;
FIG. 11 is a graph representing a discard probability of packets Pe according to RIO (Red with In and Out);
FIG. 12 is a block diagram illustrating the structure of each inter-building GW 15 shown in FIG. 7;
FIG. 13 is a schematic diagram illustrating an exemplary structure of a network system 31 for apartment buildings according to a third embodiment of the present embodiment;
FIG. 14 is a block diagram illustrating the detailed structure of a home GW 322 shown in FIG. 13;
FIG. 15 is a schematic diagram illustrating an exemplary structure of a conversion table 35 used by a packet transmitting section 34 shown in FIG. 14;
FIG. 16 is a block diagram illustrating the detailed structure of an L2 switch 33 shown in FIG. 13;
FIG. 17 is a schematic diagram illustrating a header format of IPv4 (Internet Protocol Version 4);
FIG. 18 is a schematic diagram illustrating a header format of IPv6 (Internet Protocol Version 6);
FIG. 19 is a schematic diagram illustrating the structure of a DSCP (Differentiated Service Code Point);
FIG. 20 is a table showing values of a recommended AF (Assured Forwarding)-class PHB (Per Hop Behavior); and
FIG. 21 is a schematic diagram illustrating the structures of an Ethernet frame and a tag control information field thereof as defined under IEEE (Institute of Electrical and Electronics Engineers) 802. 1Q/p.

### DESCRIPTION OF THE PREFERRED EMBODIMENTS

### (first embodiment)

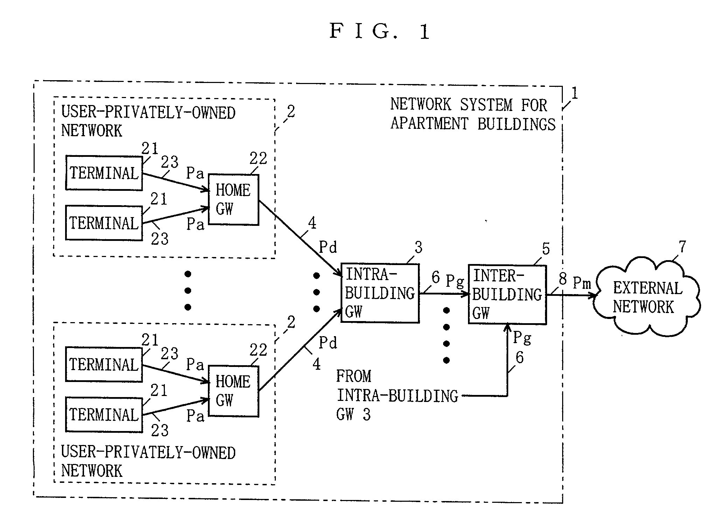

FIG. 1 is a schematic diagram illustrating an exemplary structure of a network system 1 for apartment buildings according to a first embodiment of the present invention. The network system shown in FIG. 1 is typically installed in apartment buildings, and includes a plurality of user-privately-owned networks 2, at least one intra-building gateway (hereinafter referred to as "intra-building GW") 3, a plurality of interconnection links 4 for connecting the user-privately-owned networks 2 and the intra-building GW 3, and at least one inter-building gateway (hereinafter referred to as "inter-building GW") 5. Each user-privately-owned network 2 is typically installed in one of the apartments comprised in an apartment building, and includes at least one terminal 21 (two such terminals are shown in FIG. 1), at least one home gateway (hereinafter referred to as "home GW") 22, and a plurality of interconnection links 23. In accordance with a communications protocol such as the Internet protocol, the home GW 22 carries out communications with each terminal 21 accommodated in the same user-privately-owned network 2 via the interconnection links 23. The intra-building GW 3 is connected with the respective home GWs 22 installed in the same apartment building via the plurality of interconnection links 4, and carries out communications with the home GWs 22 in accordance with the aforementioned communications protocol. The inter-building GW 5 is connected with each intra-building GW 3 installed in the same apartment building via a shared link 6, and carries out communications with the intra-building GW 3 in accordance with the aforementioned communications protocol. Furthermore, the inter-building GW 5 is connected with an external network 7 such as the Internet via a shared link 8 for sending packets defined under the aforementioned communications protocol, and receiving packets which have been transferred over the external network 7. Thus, the home GWs 22 share an uplink bandwidth (i.e., a bandwidth for uplink) of the shared link 6 and an uplink bandwidth of the shared link 8 among themselves. Note that a downlink bandwidth (i.e., a bandwidth for downlink) thereof is of no particular importance to the present embodiment, and therefore the description thereof is omitted.

In FIG. 1, it is assumed that the number of home GWs 22 accommodated in the network system 1 is four, and the bandwidth BW of the shared link 6 is 100 Mbps. It is further assumed that the shared link 6 is used by the home GWs 22 on an impartial basis. Based on these assumptions, the assured bandwidth ABa of each home GW 22 is 25 Mbps (=100 Mbps/4). As such, the assured bandwidth ABa of each home GW 22 is so set that the sum total of the bandwidth ABa of home GWs 22 is equal to or smaller than the bandwidth BW of the shared link 6.

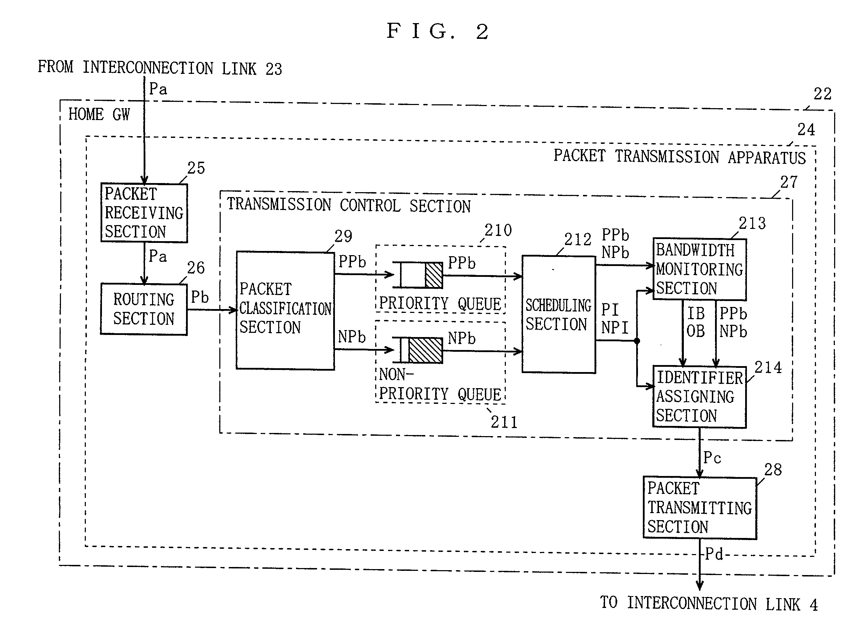

Next, the structure of the component elements of the network system 1 will be described in detail. FIG. 2 is a block diagram showing the structure of each GW 22 shown in FIG. 1. In FIG. 2, the home GW 22 includes a packet transmission apparatus 24, which comprises a packet receiving section 25, a routing section 26, a transmission control section 27, and a packet transmitting section 28. The packet receiving section 25 receives a packet Pa which has been transferred from the terminals 21 accommodated in the same user-privately-owned network 2 via the interconnection links 23 (which are exemplary of the "input links" recited in the claims). The packet receiving section 25 passes the received packet Pa to the routing section 26.

The routing section 26 performs routing in accordance with a routing table previously stored therein for changing a destination IP address (see FIGS. 17 and 18) of the packet Pa received from the packet receiving section 25. The routing section 26 passes the modified packet Pa to the transmission control section 27 as a packet Pb.

The transmission control section 27 performs transmission control for each received packet Pb. In order to perform transmission control, as shown in FIG. 2, the transmission control 27 includes a packet classification section 29, a priority queue 210, a non-priority queue 211, a scheduling section 212, a bandwidth monitoring section 213, and an identifier assigning section 214.

The packet classification section 29 receives packets Pb from the routing section 26. After receiving a packet Pb, the packet classification section 29 performs a packet classification process on the currently-received packet Pb to add the packet to either the priority queue 210 or the non-priority queue 211. Several examples of a packet classification process are next described.

In a first example, some of the terminals 21 accommodated in the user-privately-owned network 2 may be previously determined to send real time data. As used herein, real time data is data which needs to be processed in real time, and may typically be video data or audio data. Furthermore, in each packet Pa which is assembled in a terminal 21, the packet's IP address is described as a source IP address (see FIGS. 17 and 18). Under such circumstances, the IP addresses of any terminals 21 sending real time data are registered in the packet classification section 29. When the source IP address of a received packet Pb coincides with any pre-registered IP address, the packet classification section 29 adds the currently-received packet Pb to the priority queue 210. On the other hand, when the source IP address of the received packet Pb does not coincide with any pre-registered IP address, the packet classification section 29 adds the currently-received packet Pb to the non-priority queue 211.

In a second example, each terminal 21 may have a plurality of ports in order to enable communications with a plurality of other terminals. Furthermore, a terminal 21 may use only a predetermined port to output real time data. Under such circumstances, a combination of an IP address of a terminal 21 outputting real time data and a number assigned to its dedicated port for real time data transmission is registered in the packet classification section 29. When the combination of a source IP address and a port number of the received packet Pb coincide with the registered IP address and port number, the packet classification section 29 adds the currently-received packet Pb to the priority queue 210. On the other hand, when a source IP address and a port number of the received Pb does not coincide with the registered combination of an IP address and a port number, the packet classification section 29 adds the currently-received packet Pb to the non-priority queue 211.

In a third example, the terminals 21 may assemble a packet Pa whose payload is composed of real time data. Generally, for real time communications which are sensitive with respect to packet delays and delay jitter, a transport protocol called a UDP (User Datagram Protocol), which does not perform congestion control and flow control, is used. Alternatively, for non-real time data communications, a protocol called a TCP (Transmission Control Protocol), which performs congestion control and flow control to guarantee reliable communications, is often used. When real time communications are carried out based on the UDP in accordance with IPv4, a UDP protocol number is described in the protocol field (see FIG. 17) of the packet Pa. The transport protocol number as such is registered in the packet classification section 29. When it is determined that a transport protocol number of the received packet Pb coincides with a registered transport number, the packet classification section 29 adds the currently-received packet Pb to the priority queue 210. On the other hand, when it is determined that a transport protocol number of the received packet Pb does not coincide with the registered transport number, the packet classification section 29 adds the currently-received packet Pb to the non-priority queue 211. Alternatively, when real time communications are carried out using on the UDP in accordance with IPv6, a transport protocol number is described in the next header field (see FIG. 18) of the packet Pa. Thus, even when real time communications are carried out in accordance with IPv6, the packet classification section 29 can perform packet classification as in the case of conforming to Ipv4. Furthermore, the packet classification section 29 can also classify packets Pb forwarded in accordance with IPv6 by referring to the flow field (see FIG. 18).

In a fourth example, the terminals 21 may describe a DSCP value representing any of a plurality of PHBs (see FIG. 20) in a packet Pa for outputting. As described in the section entitled "Description of the Background Art", PHBs represent different classes. Among these classes, for example, an EF class requires reduced delay times, i.e., real time processing. Classes requiring such real time processing may be registered in the packet classification section 29. When a DSCP value of the received packet Pb coincides with a registered class, the packet classification section 29 adds the currently-received packet Pb to the priority queue 210. On the other hand, when a PHB of the received packet Pb does not coincide with the registered class, the currently-received packet Pb is added to the non-priority queue 211.

In a fifth example, the packet classification section 29 can measure a bit rate (i.e., currently used bandwidth) of an inputted packet Pb by using a method such as a token bucket method, which will be described further below. When a measured traffic flow of the packet Pb has a constant bit rate (hereinafter referred to as "CBR"), the packet classification section 29 adds the currently-received packet Pb to the priority queue 210. On the other hand, when a measured traffic flow of the packet Pb does not have a CBR, the currently-received packet Pb is added to the non-priority queue 211.

According to each method described above, packets Pb to be forwarded with priority, e.g., real time data, are added to the priority queue 210, and packets Pb that are not required to be forwarded with priority are added to the non-priority queue 211. For convenience of description, packets Pb which are added to the priority queue 210 will be referred to as "priority packets PPb", and packets which are added to the non-priority queue 211 will be referred to as "non-priority packets NPb".

The scheduling section 212 performs a process in accordance with PQ (Priority Queuing) according to a predetermined timing. When the process is performed, the scheduling section 212 first determines whether the priority queue 210 includes any priority packets PPb or not. When the priority queue includes a priority packet PPb, the scheduling section 212 extracts one priority packet PPb from the priority queue 210. The scheduling section 212 passes priority information PI to the identifier assigning section 214, and passes the extracted priority packet PPb to the bandwidth monitoring section 213. As used herein, the priority information PI is information indicating that a priority packet PPb has been extracted from the priority queue 210, i.e., information indicating that the extracted packet has a high priority.

Furthermore, when the priority queue 210 includes no priority packets PPb, the scheduling section 212 determines whether the non-priority queue 211 includes any non-priority packets NPb or not. When the non-priority queue 211 includes a non-priority packet NPb, the scheduling section 212 extracts one non-priority packet NPb from the non-priority queue 211. The scheduling section 212 passes non-priority information NPI to the identifier assigning section 214, and passes the extracted non-priority packet NPb to the bandwidth monitoring section 213. As used herein, the non-priority information NPI is information indicating that a non-priority packet NPb has been extracted from the non-priority queue 211, i.e., information indicating that the extracted packet has a low priority.

Note that, when no priority packets PPb are included in the priority queue 210 and no non-priority packets NPb are included in the non-priority queue 211, the scheduling section 212 waits for a reoccurrence of the predetermined timing.

The bandwidth monitoring section 213 determines whether a packet Pb (either a priority packet PPb or a non-priority packet NPb) received from the scheduling section 212 can be forwarded within the above-described assured bandwidth ABa or not. Furthermore, when it is determined that the received packet Pb can be forwarded within the assured bandwidth ABa, the bandwidth monitoring section 213 generates in-assured band information IB indicating that the received packet Pb can be forwarded within the assured bandwidth ABa, and passes the in-assured band information IB to the identifier assigning section 214. On the other hand, when it is determined that the received packet Pb cannot be forwarded within the assured bandwidth ABa, the bandwidth monitoring section 213 generates out-of-assured bandwidth information OB indicating that the received packet Pb cannot be forwarded within the assured bandwidth ABa, and passes the out-of-assured bandwidth information OB to the identifier assigning section 214.

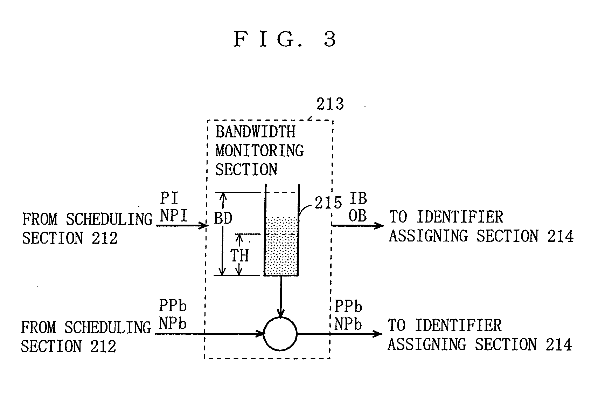

To perform the above-described determination process, the bandwidth monitoring section 213 uses either priority information PI or non-priority information NPI, which is received from the scheduling section 212 at substantially the same time that the packet PPb or NPb is received, and employs the token bucket meter method. FIG. 3 is a schematic diagram illustrating the token bucket meter method. In FIG. 3, the token bucket meter method is a version of a so-called token bucket algorithm extended so that a single token bucket 215 is shared in both the priority queue 210 and the non-priority queue 211. Tokens are accumulated in the token bucket 215 at a rate corresponding to the assured bandwidth ABa, no more than to a level corresponding to the depth BD of the token bucket 215, which is predetermined. Furthermore, a threshold value TH that is smaller than the depth BD is set in the token bucket 215 so as to allow the priority packets PPb to obtain tokens with a higher priority than the non-priority packet NPb.

When receiving the priority information PI from the scheduling section 212, the bandwidth monitoring section 213 determines whether an amount of tokens corresponding to a packet length of a substantially concurrently-received priority packet PPb has been accumulated in the token bucket 215 or not. When it is determined that a sufficient amount of tokens corresponding to the packet length of the priority packet PPb has been accumulated, the bandwidth monitoring section 213 obtains the amount of tokens corresponding to the packet length from the token bucket 215, and accordingly reduces the amount of tokens in the token bucket 215. Furthermore, in this case, the bandwidth monitoring section 213 generates in-assured bandwidth information IB. Thereafter, the bandwidth monitoring section 213 passes the generated in-assured bandwidth information IB and the currently-received priority packet PPb to the identifier assigning section 214. On the other hand, when it is determined that an amount of tokens corresponding to the packet length of the priority packet PPb has not been accumulated, the bandwidth monitoring section 213 generates out-of-assured bandwidth information OB without obtaining tokens. Thereafter, the bandwidth monitoring section 213 passes the generated out-of-assured bandwidth information OB and the currently-received priority packet PPb to the identifier assigning section 214.

Furthermore, when the non-priority information NPI is received from the scheduling section 212, the bandwidth monitoring section 213 first determines whether tokens have been accumulated in the token bucket 215 to a level that is equal to or greater than the threshold value TH or not. Only when it is determined that tokens have been accumulated in the token bucket 215 to a level that is equal to or greater than the threshold value TH, does the bandwidth monitoring section 213 determine whether an amount of tokens corresponding to the packet length of a substantially concurrently-received non-priority packet NPb has been accumulated in the token bucket 215 or not. When it is determined that a sufficient amount of tokens corresponding to the packet length of the non-priority packet NPb has been accumulated, the bandwidth monitoring section 213 obtains the amount of tokens corresponding to the packet length from the token bucket 215, and accordingly reduces the amount of tokens in the token bucket 215. Furthermore, the bandwidth monitoring section 213 generates in-assured bandwidth information IB. Thereafter, the bandwidth monitoring section 213 passes the generated in-assured bandwidth information IB and the currently-received non-priority packet NPb to the identifier assigning section 214. On the other hand, when it is determined that tokens have not been accumulated to a level that is equal to or greater than the threshold value TH, or an amount of tokens corresponding to the packet length has not been accumulated, the bandwidth monitoring section 213 generates out-of-assured bandwidth information OB without obtaining tokens. Thereafter, the bandwidth monitoring section 213 passes the generated out-of-assured bandwidth information OB and the currently-received non-priority packet NPb to the identifier assigning section 214.

As described above, by setting a threshold value TH in the token bucket 215, the probability of generating in-assured bandwidth information IB becomes higher than the probability of generating out-of-assured bandwidth information OB. Thus, it is possible to forward each priority packet PPb to the receiving end with smaller packet delays and smaller delay jitter, as will be described in detail further below.

The identifier assigning section 214 receives either priority information PI or non-priority information NPI from the scheduling section 212. Furthermore, the identifier assigning section 214 receives, at substantially the same time that the priority information PI is received, a combination of the priority packet PPb and either the in-assured bandwidth information IB or the out-of-assured bandwidth information OB from the bandwidth monitoring section 213. Furthermore, the identifier assigning section 214 receives, at substantially the same time that the non-priority information NPI is received, a combination of the non-priority packet NPb and either the in-assured bandwidth information IB or the out-of-assured bandwidth information OB from the bandwidth monitoring section 213.

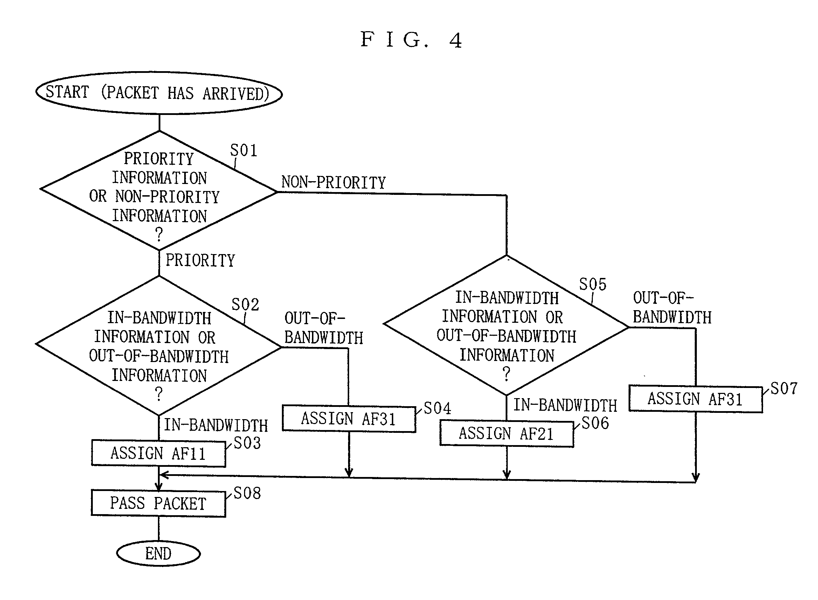

After receiving the combination of data as described above, the identifier assigning section 214 performs an identifier assigning process to assign one of the following identifiers: a first priority identifier (hereinafter referred to as "AF11"), a second priority identifier (hereinafter referred to as "AF21"), and a third priority identifier (hereinafter referred to as "AF31") to the currently-received packet Pb. FIG. 4 is a flowchart illustrating the process performed by the identifier assigning section 214. Referring to FIG. 4, the identifier assigning section 214 first determines whether the currently-received information is priority information PI or non-priority information NPI (step S01).

When it is determined at step S01 that the received information is priority information PI, the identifier assigning section 214 determines whether the received priority information PI is in-assured bandwidth information IB or out-of-assured bandwidth information OB (step S02).

When it is determined at step S02 that the received priority information PI is in-assured bandwidth information IB, the identifier assigning section 214 assigns AF11 to the currently-received priority packet PPb (step S03). AF11 is an identifier indicating that the received priority packet has a high priority and can be forwarded within the assured bandwidth ABa; in other words, the identifier AF11 is a combination of priority information PI and in-assured bandwidth information IB. Furthermore, AF11 is preferably described in the type of service field (see FIG. 17) when a priority packet PPb is forwarded in accordance with IPv4, and preferably described in the traffic class field (see FIG. 18) when a priority packet PPb is forwarded in accordance with IPv6. More preferably, the DSCP value of AF11 (i.e., the most significant 6 bits of the type of service and traffic class fields) is "001010".

When it is determined at step S02 that the received priority information PI is out-of-assured bandwidth information OB, the identifier assigning section 214 assigns AF31 to the received priority packet PPb (step S04). Thus, AF31 is an identifier indicating that the received priority packet cannot be forwarded within the assured bandwidth ABa; in other words, AF31 is an identifier at least including out-of-assured bandwidth information OB. Furthermore, as is the case with AF11, AF31 is preferably described in either the type of service or traffic class field. The DSCP value of AF31 is preferably "011010".

On the other hand, when it is determined at step S01 that the received information is non-priority information NPI, the identifier assigning section 214 determines whether the received priority information NPI is in-assured bandwidth information IB or out-of-assured bandwidth information OB similarly to step S02 (step S05).

When it is determined at step S05 that the received non-priority information NPI is in-assured bandwidth information IB, the identifier assigning section 214 assigns the above-described AF21 to the received non-priority packet NPb (step S06). Thus, AF21 is an identifier indicating that the received priority packet has a low priority but can be forwarded within the assured bandwidth ABa; in other words, the identifier AF21 is a combination of non-priority information NPI and in-assured bandwidth information IB. Furthermore, as is the case with AF11, AF21 is preferably described in either the type of service or traffic class field. The DSCP value of AF21 is preferably "010010".

On the other hand, when it is determined at step S05 that the received non-priority information NPI is out-of-assured bandwidth information OB, the identifier assigning section 214 assigns AF31 to the received non-priority packet NPb (step S07).

After the received packet has been processed in one of steps S03, S04, S06, and S07, the identifier assigning section 214 passes the priority packet PPb or the non-priority packet NPb that has been processed therein to the packet transmitting section 28 as a packet Pc (step S08). After passing the packet Pc to the packet transmitting section 28, the identifier assigning section 214 waits until receiving another combination of information.

The packet transmitting section 28 performs a necessary process on the received packet Pc, and outputs the processed packet Pc as a packet Pd to the interconnection link 4 (which is exemplary of the "output link" recited in the claims). The outputted packet Pd is transferred over the interconnection link 4 and received by the intra-building GW 3.

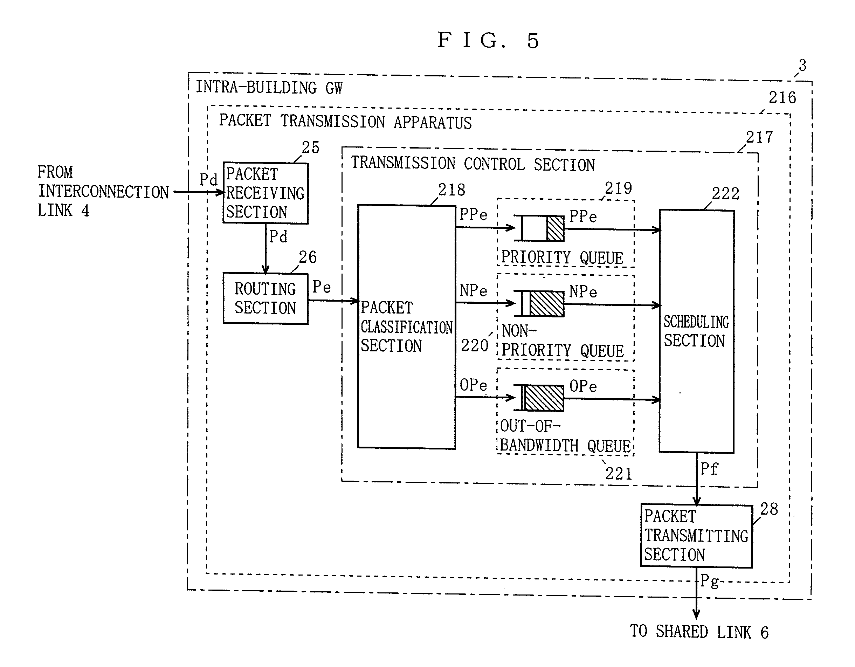

FIG. 5 is a block diagram illustrating the structure of each intra-building GW 3 shown in FIG. 1. In FIG. 5, the intra-building GW 3 includes a packet transmission apparatus 216. The packet transmission apparatus 216 differs from the packet transmission apparatus 24 only in that a transmission control section 217 is provided instead of a transmission control section 27. Therefore, any component elements in FIG. 5 that function in similar manners to their counterparts in FIG. 2 are denoted by like numerals, with the descriptions thereof simplified.

Referring to FIG. 5, a packet receiving section 25 receives packets Pd which has been transferred over the interconnection link 4 (which is exemplary of the "first link" recited in the claims), and passes the received packets Pd to a routing section 26. The routing section 26 changes the destination IP address of each packet Pd transferred from the packet receiving section 25, and passes the processed packets Pd to the transmission control section 217 as packets Pe.

The transmission control section 217 performs transmission control for each received packet Pe. In order to perform the transmission control, as shown in FIG. 5, the transmission control section 217 includes a packet classification section 218, a priority queue 219, a non-priority queue 220, an out-of-bandwidth queue 221, and a scheduling section 222.

The packet classification section 218 receives the packets Pe from the routing section 26, and performs a packet classification process on the received packets Pe. In performing the packet classification process, the packet classification section 218 first determines which one of the identifiers AF11, AF21, and AF31 has been assigned to each received packet Pe. After this determination is made, the packet classification section 218 adds any packet assigned with AF11 to the priority queue 219 as a priority packet PPe, any packet assigned with AF21 to the non-priority queue 220 as a non-priority packet NPe, and any packet assigned with AF31 to the out-of-bandwidth queue 221 as an out-of-bandwidth packet OPe, respectively.

The scheduling section 222 starts operating in accordance with PQ (Priority Queuing) according to a predetermined timing. In this operation, the scheduling section 222 gives the highest priority to extracting each priority packet PPe from the priority queue 219, and passes the extracted packet PPe to the packet transmitting section 28 as a packet Pf. Furthermore, the scheduling section 222 gives a higher priority to extracting each no-priority packet NPe from the non-priority queue 220 than to extracting each out-of-bandwidth packet OPe from the out-of-bandwidth queue 221, and passes the extracted packet NPe to the packet transmitting section 28 as a packet Pf. When neither the priority queue 219 nor the non-priority queue 220 includes packets, the scheduling section 222 extracts each out-of-bandwidth packet OPe, if any, from the out-of-bandwidth queue 221, and passes the extracted packet OPe to the packet transmitting section 28 as a packet Pf. When no packet is included in the priority queue 219, the non-priority queue 220, and the out-of-bandwidth queue 221, the scheduling section 222 waits for a reoccurrence of the predetermined timing.

As stated above, at each home GW 22 accommodated in the network system 1, one of the identifiers AF11, AF21, and AF31 is assigned to each inputted packet Pa while taking into consideration the assured bandwidth ABa of each home GW 22. Therefore, the total traffic associated with packets PPe and NPe inputted respectively into the propriety queue 219 and the non-priority queue 220 of the intra-building GW 3 is not greater than the bandwidth BW of the shared link 6. Thus, packets PPe and NPe are prevented from staying stagnantly at least in the priority queue 219 and the non-priority queue 220, respectively. As a result, packets classified as priority packets PPb in the home GW 22 are forwarded with a minimum delay to the receiving end. Furthermore, it is possible to minimize delay jitter of the priority packets PPb.

The packet transmitting section 28 performs a necessary process on each received packet Pf, and outputs the processed packet Pf as a packet Pg to the shared link 6 (which is exemplary of the "second link" recited in the claims) . The outputted packet Pg is transferred over the shared link 6, and received by the inter-building GW 5 (see FIG. 1).

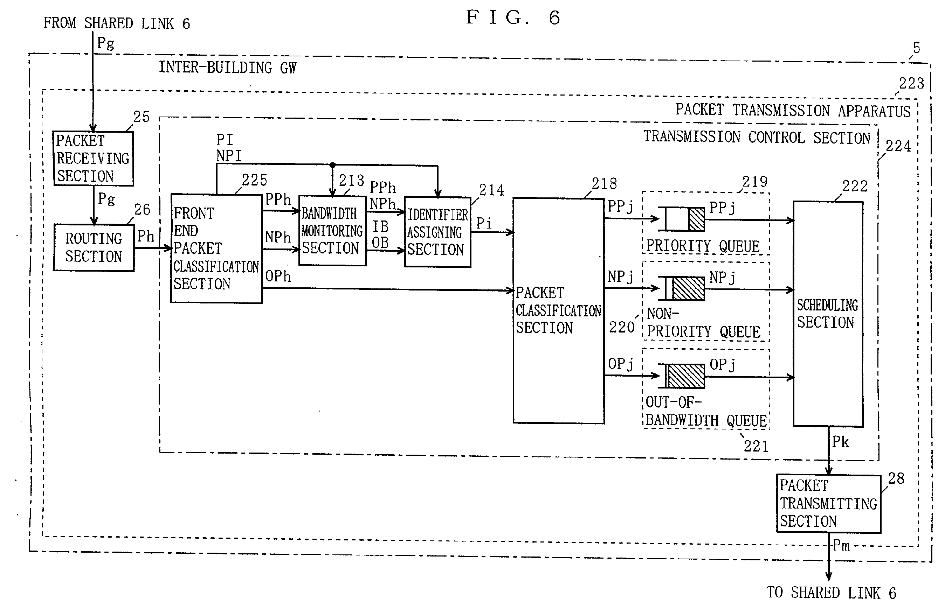

FIG. 6 is a block diagram illustrating the structure of each inter-building GW 5 shown in FIG. 1. In FIG. 6, the inter-building GW 5 includes a packet transmission apparatus 223. The packet transmission apparatus 223 differs from the packet transmission apparatus 216 only in that a transmission control section 224 is provided instead of a transmission control section 217. Therefore, any component elements in FIG. 6 that function in similar manners to their counterparts in FIG. 5 are denoted by like numerals, with the descriptions thereof simplified.

Referring to FIG. 6, a packet receiving section 25 receives the packets Pg transferred over the shared link 6 (which is exemplary of the "input link" recited in the claims), and passes each received packet Pg to a routing section 26. The routing section 26 changes the destination IP address of each packet Pg transferred from the packet receiving section 25, and passes each processed packet Pg to the transmission control section 224 as a packet Ph.

The transmission control section 224 performs transmission control for each received packet Ph. The transmission control section 224 differs from the transmission control section 217 shown in FIG. 5 only in that a front end packet classification section 225, a bandwidth monitoring section 213, and an identifier assigning section 214 are further provided. Therefore, any component elements of the transmission control section 224 shown in FIG. 6 that function in similar manners to their counterparts of the transmission control section 217 shown in FIG. 5 are denoted by like numerals, with the descriptions thereof simplified. Furthermore, the bandwidth monitoring section 213 and the identifier assigning section 214 shown in FIG. 6, which function in similar manners to their counterparts of the home GW 22 shown in FIG. 2, are denoted by like numerals, with the descriptions thereof simplified.

After receiving a packet Ph from the routing section 26, the front end packet classification section 225 performs a packet classification process. In the following description, the packet classification process performed by the front end packet classification section 225 is referred to as a "first packet classification process" so as to be distinguished from the packet classification process performed by a packet classification section 218. In performing the first packet classification process, the front end packet classification section 225 determines which one of the identifiers AF11, AF21, and AF31 has been assigned to the received packet Ph. After this determination is made, the front end packet classification section 225 passes each packet assigned with AF11 to the bandwidth monitoring section 213 as a priority packet PPh. Furthermore, when it is determined that the received packet has been assigned with AF11, the front end packet classification section 225 generates priority information PI as described above, and passes the generated priority information PI to both the bandwidth monitoring section 213 and the identifier assigning section 214.

The front end packet classification section 225 passes each packet assigned with AF21 to the bandwidth monitoring section 213 as a non-priority packet NPh. Furthermore, when it is determined that the received packet has been assigned with AF21, the front end packet classification section 225 generates non-priority information NPI as described above, and passes the generated non-priority information NPI to both the bandwidth monitoring section 213 and the identifier assigning section 214.

The front end packet classification section 225 passes each packet assigned with AF31 to the packet classification section 218 as an out-of-bandwidth packet OPh.

The bandwidth monitoring section 213 determines whether either the priority packet PPh or the non-priority packet NPh received from the front end packet classification section 225 can be forwarded within the assured bandwidth ABb of the inter-building GW 5 or not. When it is determined that the received packet can be forwarded within the assured bandwidth ABb, the bandwidth monitoring section 213 generates in-assured bandwidth information IB as described above, and passes the generated in-assured bandwidth information IB and either the currently-received priority packet PPh or non-priority packet NPh to the identifier assigning section 214. When it is determined that the received packet cannot be forwarded within the assured bandwidth ABb, the bandwidth monitoring section 213 generates out-of-assured bandwidth information OB as described above, and passes the generated out-of-assured bandwidth information OB and either the currently-received priority packet PPh or non-priority packet NPh to the identifier assigning section 214.

The identifier assigning section 214 receives either the priority information PI or the non-priority information NPI from the front end packet classification section 225. At substantially the same time that the priority information PI is received, the identifier assigning section 214 receives a combination of the priority packet PPh and either the in-assured bandwidth information IB or the out-of-assured bandwidth information OB from the bandwidth monitoring section 213. Alternatively, at substantially the same time that the non-priority information NPI is received, the identifier assigning section 214 receives a combination of the non-priority packet NPb and either the in-assured bandwidth information IB or the out-of-assured bandwidth information OB from the bandwidth monitoring section 213. After receiving the combination of information described above, the identifier assigning section 214 performs an identifier assigning process shown in FIG. 4, and passes in step S08 either the processed priority packet PPh or non-priority packet NPh to the packet classification section 218 as a packet Pi.

The packet classification section 218 receives the out-of-bandwidth packet OPh from the front end packet classification section 225 or the packet Pi from the identifier assigning section 214. After receiving either the out-of-bandwidth packet OPh or the packet Pi, the packet classification section 218 performs a packet classification process. First, the packet classification section 218 determines which one of the identifiers AF11, AF21, and AF31 has been assigned to the received out-of-bandwidth packet OPh or packet Pi. After this determination is made, the packet classification section 218 adds each packet assigned with AF11 to a priority queue 219 as a priority packet PPj, each packet assigned with AF21 to a non-priority queue 220 as a non-priority packet NPj, and each packet assigned with AF31 to an out-of-bandwidth queue 221 as an out-of-bandwidth packet OPj, respectively.

In the same manner as described above, the scheduling section 222 starts operating in accordance with PQ (Priority Queuing) according to a predetermined timing for passing one of the priority packet PPj, the non-priority packet NPj, and the out-of-bandwidth packet OPj to a packet transmitting section 28 as a packet Pk. The packet transmitting section 28 performs a necessary process on the received packet Pk, and outputs the processed packet Pk as a packet Pm to the shared link 8 (which is exemplary of the "output link" recited in the claims). The packet Pm is transmitted via the external network 7 to the receiving end (not shown).

As described above, the conventional bandwidth monitoring device rewrites header information. As a result, another device (router) on the network cannot determine the original priority of each received packet. However, according to the present embodiment, both information about priority of each received packet and information indicating whether the packet can be forwarded within the assured bandwidth or not are mapped to DSCP values, in the form of identifiers AF11, AF21, and AF31, thereby enabling each device on a network to determine the original priority of each received packet. Thus, if congestion occurs when packets are outputted from the inter-building GW 5 to the shared link 8 during communications from the user-privately-owned network 2 to the external network 7, it is possible to realize priority control using the original priority of each packet.

For example, assume that, in FIG. 1, one of the terminals 21 outputs a high-priority packet Pa at 10 Mbps to the external network 7, and that another terminal of the terminals 21 outputs a low-priority packet Pa at 20 Mbps to the external network 7 at substantially the same time that the high-priority packet Pa is outputted. It is further assumed that the assured bandwidth of the intra-building GW 3 is 25 Mbps, and that the assured bandwidth of the inter-building GW 5 is 20 Mbps. Under these assumptions, the high-priority packet Pa is assigned with AF11 in the home GW 22. Packets Pa assigned with AF11 are processed with priority in the transmission control section 217 of the intra-building GW 3, thereby being outputted as packets Pg to the shared link 6 with small delay jitter. That is, the high-priority packet Pg is transferred over the shared link 6 at about 10 Mbps. Furthermore, the high-priority packet Pg is assigned with AF11 in the inter-building GW 5 because the assured bandwidth of the inter-building GW 5 is 20 Mbps. Packets Pg assigned with AF11 are processed with priority in the transmission control section 221 of the inter-building GW 5, thereby being outputted as packets Pm to the shared link 8 with small delay jitter. That is, the high-priority packet Pm is transferred over the shared link 8 at about 10 Mbps.

On the other hand, the low-priority packet Pa is assigned with AF21 in the home GW 22. Furthermore, the low-priority packet Pa is not processed with priority in the transmission control section 21 of the intra-building GW 3, and outputted as a packet Pg. The assured bandwidth of the intra-building GW 3 is 25 Mbps. Therefore, the low-priority packets Pg are also transferred over the shared link 6 at about 15 Mbps. However, the low-priority packets Pg are assigned with either AF21 or AF31 in the inter-building GW 5 because the assured bandwidth of the inter-building GW 5 is 20 Mbps. Each packet Pg assigned with AF21 is not processed with priority in the transmission control section 221 of the inter-building GW 5, and outputted to the shared link 8 as packets Pm. That is, the packets Pm assigned with AF21 is forwarded within the remaining bandwidth, i.e., at about 10 Mbps. Furthermore, each packet Pg assigned with AF31 is last processed in the transmission control section 221 of the inter-building GW 5, and outputted to the shared link 8 as a packet Pm. That is, the packets Pm assigned with AF31 are forwarded at about 10 Mbps, similarly to that assigned with AF21. Thus, although the assured bandwidth is reduced by 5 Mbps from the shared link 6 to the shared link 8, an identifier assigning process unique to the present embodiment allows the packets Pa that have originally had a high priority to be processed with priority both in the intra-building GW 3 and the inter-building GW 5.

Next, a network system in which the intra-building GW 3 and the inter-building GW 5 shown in FIG. 1 are replaced respectively with two conventional bandwidth monitoring devices will be described. Herein, the bandwidth monitoring device replacing the intra-building GW 3 is referred to as a "first bandwidth monitoring device", and the bandwidth monitoring device replacing the inter-building GW 5 is referred to as a "second bandwidth monitoring device". Note that the other component elements of the network system are similar to those shown in FIG. 1. Again, it is also assumed that one of the terminals 21 outputs a high-priority packet Pa at 10 Mbps to the external network 7, and that another terminal of terminals 21 outputs a low-priority packet Pa at 20 Mbps to an external network 7 at substantially the same time that the high-priority packet Pa is outputted. It is further assumed that the assured bandwidth of the first bandwidth monitoring device is 25 Mbps, and that the assured bandwidth of the second bandwidth monitoring device is 20 Mbps. The assured bandwidth of the packets transferred over the shared link 8 is reduced by 5 Mbps from that of the packet transferred over the shared link 6. Thus, in the second bandwidth monitoring device, a packet that cannot be forwarded as a high-priority packet due to the reduced bandwidth is re-marked into a low-priority packet. In performing this process, the conventional bandwidth monitoring device cannot determine whether the packet required to be re-marked has always been a low-priority packet or high-priority packet. Thus, the packet that was originally a high-priority packet may be re-marked into a low-priority packet in the conventional bandwidth monitoring device so that the packet loses the information that it has originally been a high priority packet. As a result, as described in the section entitled "Description of the Background Art", if traffic congestion occurs in a device (router) that will subsequently receive such a packet, it is impossible to perform priority control based on the original priority.

### (second embodiment)

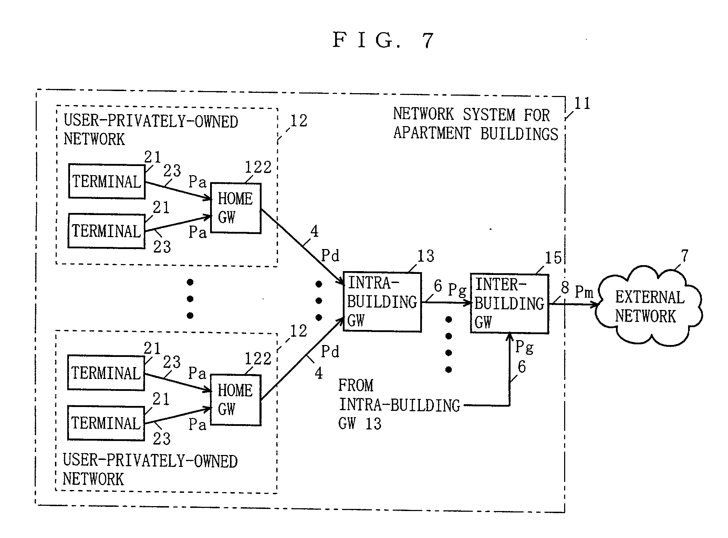

FIG. 7 is a block diagram illustrating an exemplary structure of a network system 11 for apartment buildings according to a second embodiment of the present invention. In FIG. 7, the network system 11 differs from the network system 1 of FIG. 1 only in that a user-privately-owned network 12, an intra-building GW 13, and an inter-building GW 15 are provided instead of a user-privately-owned network 2, an intra-building GW 3, and an inter-building GW 5. Therefore, any component elements in FIG. 7 that function in similar manners to their counterparts in FIG. 1 are denoted by like numerals, with the descriptions thereof omitted. Furthermore, the user-privately-owned networks 12 and 2 differ from each other in that a home GW 122 is provided in the user-privately-owned network 12 as opposed to the home GW 22 of the user-privately-owned network 2, although both have a plurality of terminals 21 in common.

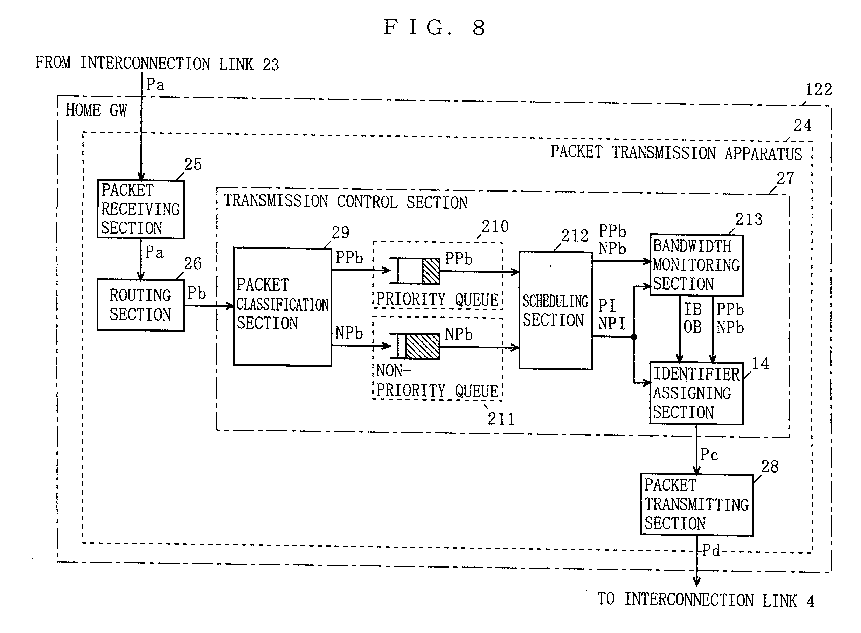

Next, the components of the network system 11 will be described in detail. FIG. 8 is a block diagram illustrating the detailed structure of the home GW 122 shown in FIG. 7. In FIG. 8, the home GW 122 differs from the home GW 22 of FIG. 2 only in that an identifier assigning section 14 is provided instead of an identifier assigning section 214. Therefore, any component elements in FIG. 8 that function in similar manners to their counterparts in FIG. 2 are denoted by like numerals, with the descriptions thereof omitted.

The identifier assigning section 14 receives, similarly to the identifier assigning section 214, either priority information PI or non-priority information NPI from a scheduling section 212. Furthermore, the identifier assigning section 14 receives a combination of a priority packet PPb and either in-assured bandwidth information IB or out-of-assured bandwidth information OB from a bandwidth monitoring section 213 at substantially the same time that the priority information PI is received. Furthermore, the identifier assigning section 14 receives a combination of a non-priority packet NPb and either in-assured bandwidth information IB or out-of-assured bandwidth information OB from the bandwidth monitoring section 213 at substantially the same time that the non-priority information NPI is received.

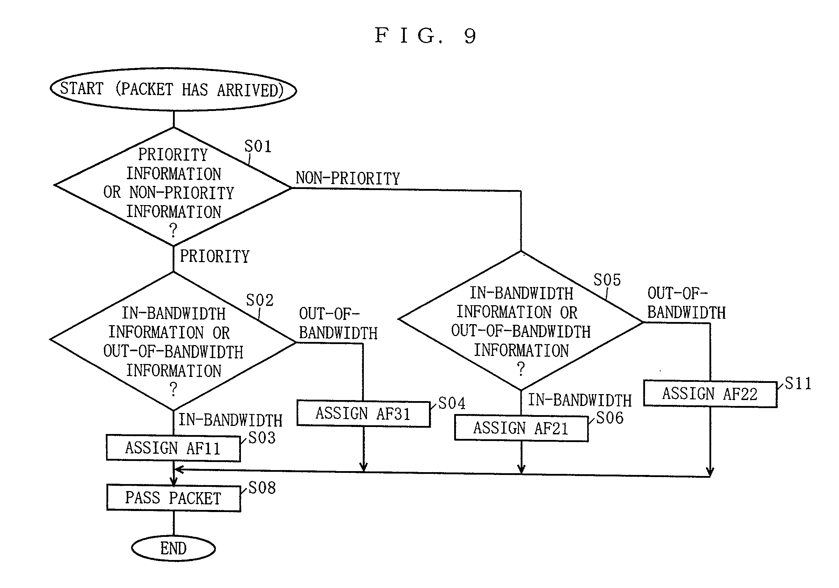

After receiving such a combination of information, the identifier assigning section 14 performs an identifier assigning process to determine an identifier to be assigned to each received packet from among four identifiers, i.e., the above-described first to third identifiers (AF11, AF21, and AF31) and a fourth identifier (hereinafter referred to as "AF22"). FIG. 9 is a flowchart illustrating a process performed by the identifier assigning section 14 shown in FIG. 8. FIG. 9 differs from FIG. 4 only in that FIG. 9 includes step S11 instead of step S07. Therefore, any steps in FIG. 9 that function in similar manners to their counterparts in FIG. 4 are denoted by like step numbers, with the descriptions thereof omitted.

When it is determined at step S05 that the received information is out-of-assured bandwidth information OB, the identifier assigning section 14 assigns AF22 to the received non-priority packet NPb (step S11). AF22 is an identifier assigned to a packet which has been determined to have a low priority and to be unable to be forwarded within the assured bandwidth ABa; in other words, the identifier 22 is a combination of non-priority information NPI and out-of-assured bandwidth information OB. Furthermore, as is the case with AF11, for example, AF21 is preferably described in either the type of service field (see FIG. 17) or the traffic class field (see FIG. 18). More preferably, the DSCP value of AF22 is "010100".

Note that, in the first embodiment, AF31 is assigned to any priority packet PPb and non-priority packet NPb when the identifier assigning section 214 has determined that the received information is out-of-assured bandwidth information OB, this being the case with both steps S02 and S05. In other words, AF31 is assigned to any packet PPb or packet NPb that cannot be forwarded within the assured bandwidth ABa in the first embodiment. However, in the present embodiment, AF22 instead of AF31 is assigned when the identifier assigning section 214 receives non-priority information NPI as determined at step S01 and out-of-assured bandwidth information OB as determined at step S05. Thus, AF31 is an identifier assigned to a priority packet PPb that has a high priority and cannot be forwarded within the assured bandwidth ABa; in other words, the identifier 31 is a combination of priority information PI and out-of-assured bandwidth information OB.

After one of steps S03, S04, S06, and S11, the identifier assigning section 14 passes either the processed priority packet PPb or non-priority packet NPb to a packet transmitting section 28 as a packet Pc (step S08). Thereafter, the identifier assigning section 14 waits until receiving another combination of information.

The packet transmitting section 28 performs a necessary process on the received packet Pc, and outputs the processed packet Pc as a packet Pd to the interconnection link 4. The outputted packet Pd is transferred over the interconnection link 4, and received by the intra-building GW 13.

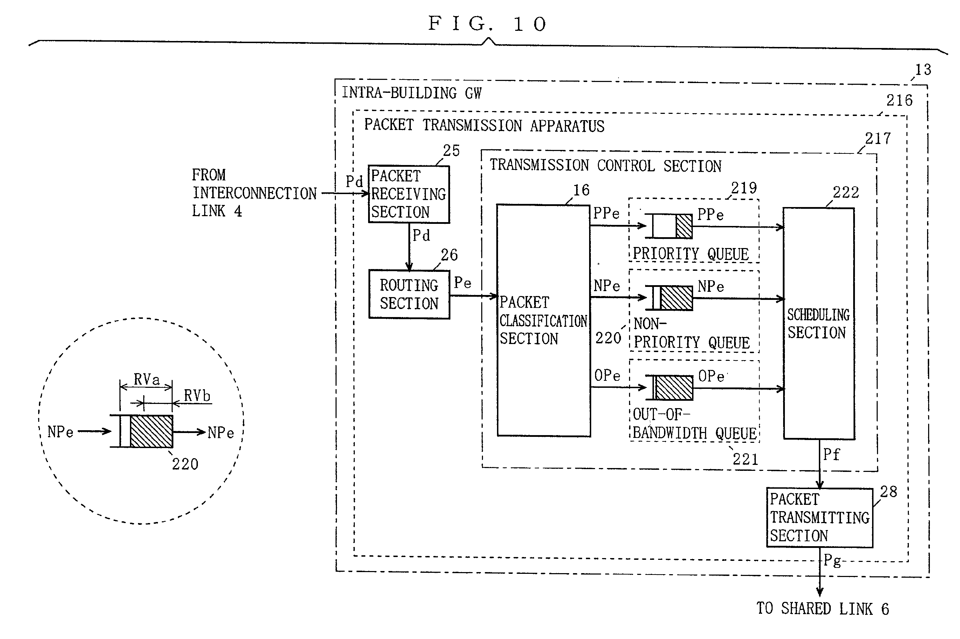

FIG. 10 is a block diagram illustrating the structure of each intra-building GW 13 shown in FIG. 7. In FIG. 10, the intra-building GW 13 differs from the intra-building GW 3 of FIG. 5 only in that a packet classification section 16 is provided instead of a packet classification section 218. Therefore, any component elements in FIG. 10 that function in similar manners to their counterparts in FIG. 5 are denoted by like numerals, with the descriptions thereof omitted.

After receiving the packet Pe from the routing section 26, the packet classification section 16 performs a packet classification process on the received packet Pe. The packet classification section 16 determines which one of the identifiers AF11, AF21, AF22, and AF31 has been assigned to the received packet Pe. After this determination is made, the packet classification section 16 adds any packet Pe assigned with AF11 to the priority queue 219 as a priority packet PPe and any packet Pe assigned with AF31 to the out-of-bandwidth queue 221 as an out-of-bandwidth packet OPe, respectively. At this point, the packet classification section 16 performs the same process that performed by the packet classification section 218.

However, when either AF21 or AF22 is assigned to the received packet Pe, the packet classification section 16 performs a process different from that performed by the packet classification section 218. Specifically, as shown in a dotted circle of FIG. 10, the packet classification section 16 has two reference values RVa and RVb for the non-priority queue 220. The reference value RVa represents a length of the non-priority queue 220, which is used as a discarding criterion for determining whether a packet Pe assigned with AF21 is to be discarded or not. The reference value RVb is smaller than the reference value RVa, and represents a length of the non-priority queue 220, which is used as a discarding criterion for determining whether a packet Pe assigned with AF22 is to be discarded or not. When any packet Pe assigned with AF21 is received, the packet classification section 16 determines whether the amount of packets Pe in the non-priority queue 220 has exceeded the reference value RVa or not. When it is determined that the amount of packets Pe in the non-priority queue 220 has exceeded the reference value RVa, the packet classification section 16 discards the currently-received packet Pe. When it is determined that the amount of packets Pe in the non-priority queue 220 has not exceeded the reference value RVa, the packet classification section 16 adds the currently-received packet Pe to the non-priority queue 220 as a non-priority packet NPe.

Furthermore, when any packet Pe assigned with AF22 is received, the packet classification section 16 determines whether the amount of packets Pe in the non-priority queue 220 has exceeded the reference value RVb or not. When it is determined that the amount of packets Pe in the non-priority queue 220 has exceeded the reference value RVb, the packet classification section 16 discards the currently-received packet Pe. When it is determined that the amount of packets Pe in the non-priority queue 220 has not exceeded the reference value RVb, the packet classification section 16 adds the currently-received packet Pe to the non-priority queue 220 as a non-priority packet NPe.

Thus, those packets assigned with AF22 are more likely to be discarded than those assigned with AF21. That is, non-priority packets NPb assigned with non-priority information NPI and in-assured bandwidth information IB at the home GW 122 are protected in the intra-building GW 13. Now, it is assumed that the traffic of packets Pc assigned with priority information PI at the home GW 122 has a CBR flow. In this case, the traffic of any packets Pc assigned with non-priority information NPI includes a TCP flow. Each packet Pc comprising the TCP flow has either AF21 or AF22 assigned thereto, and therefore is added to the non-priority queue 220. Thus, the TCP flow invariably enters the non-priority queue 220, so that packets are prevented from arriving at the receiving end in a non-consecutive order. For example, assume that the packets Pc composing the TCP flow may be added to the priority queue 219 as well as to the non-priority queue 220; in this case, the packets added to the priority queue 219 would be extracted earlier than the packets added to the non-priority queue 220 under the priority control. As a result, these packets would arrive at the receiving end in a non-consecutive order. Under RENO, which is a commonly used version of TCP implementation, when three or more packets arrive at the receiving end in such a non-consecutive order, the congestion control function of the TCP is activated to reduce the packet transmission volume. Thus, the throughput of the TCP flow may be extremely decreased. In the present embodiment, the above-described reversal in the order of packet arrival does not occur. Thus, it is possible to prevent a decrease in the TCP flow throughput.

Next, a variant of the packet classification process performed by the packet classification section 16 is described. In this variant packet classification process, any packet assigned with AF11 is added to the priority queue 219 as a priority packet PPe, any packet assigned with either AF21 or AF22 is added to the non-priority queue 220 as a non-priority packet NPe, and any packet assigned with AF31 is added to the out-of-bandwidth queue 221 as an out-of-bandwidth packet OPe as is the case with the above-described packet classification process.

In this variant, however, AF21 and AF22 are associated with different discard priorities, such that the discard priority for AF21 is lower than that for AF22. When a packet Pe assigned with either AF21 or AF22 is received, the packet classification section 16 determines any packet Pe assigned with AF21 to be an in-profile packet, and any packet Pe assigned with AF22 to be an out-of-profile packet in accordance with a RIO (RED with In and Out) queuing algorithm. When an average queue length of the non-priority queue 220 becomes too long, the packet classification section 16 discards the out-of-profile packets Pe with a higher priority than the in-profile packets Pe.

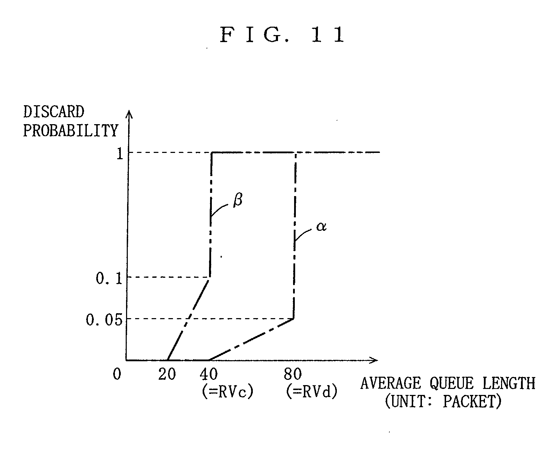

FIG. 11 is a graph representing a packet discard probability according to RIO. In FIG. 11, curve α represents a discard probability of in-profile packets Pe, and curve β represents a discard probability of out-of-profile packets Pe. More specifically, as represented with curve α, the discard probability of in-profile packets Pe remains at 0 until the average queue length of the non-priority queue 220 reaches a relatively small reference value RVc. After the average queue length has reached the reference value RVc, the discard probability continues to rise at a constant rate until the average queue length reaches a reference value RVd that is greater than the reference value RVc. Once the average queue length exceeds the reference value RVd, any additional in-profile packets Pe are discarded. On the other hand, as shown in FIG. 11, any out-of-profile packets Pe are discarded at smaller average queue lengths than the in-profile packets Pe since a higher discard priority is given to AF22.

Thus, also in this variant packet classification process, assuming that a traffic of packets Pc assigned with priority information PI by the home GW 122 has a CBR flow using a UDP, a traffic of packets Pc assigned with non-priority information NPI will include a TCP flow, i.e., a flow using a TCP. Any packets Pc composing the TCP flow are assigned with either AF21 or AF22, and therefore are added to the non-priority queue 220. Thus, since the TCP flow is added to the non-priority queue 220, packets are prevented from arriving at the receiving end in a non-consecutive order. As a result, as in the case described above, the packets Pc are forwarded in the proper (consecutive) order. Furthermore, a combination of the discard control according to RIO and the TCP flow control ensures that any packet Pe composing even a TCP flow is protected (i.e., not likely to be discarded) so long as they are in-profile packets, i. e., packets Pe assigned with AF21.

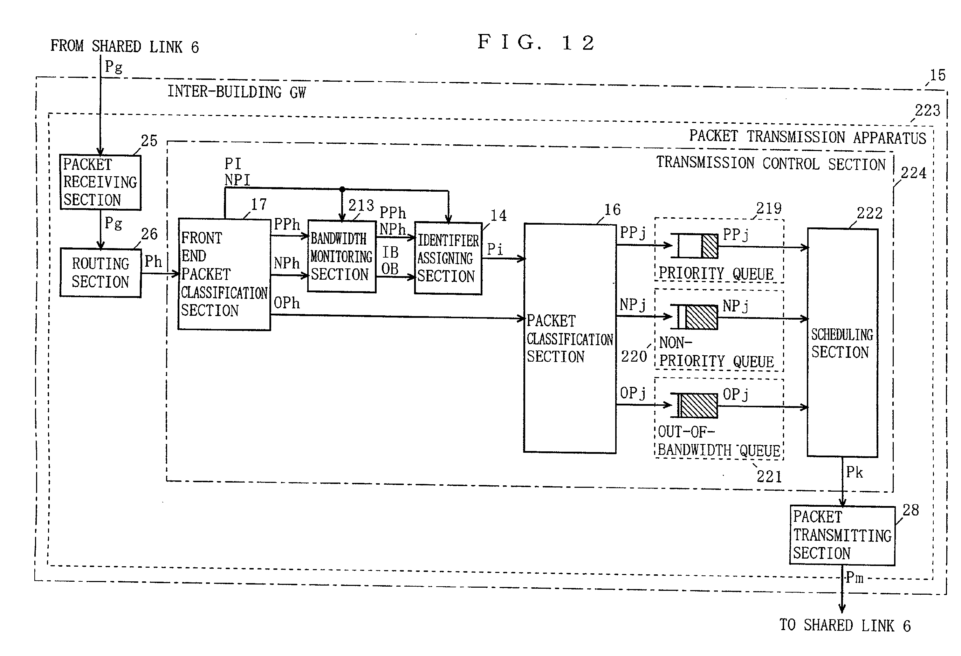

FIG. 12 is a block diagram illustrating the structure of each inter-building GW 15 shown in FIG. 7. In FIG. 12, the inter-building GW 15 differs from the inter-building GW 5 of FIG. 6 only in that a front end packet classification section 17, an identifier assigning section 14, and a packet classification section 16 are provided instead of a front end packet classification section 225, an identifier assigning section 214, and a packet classification section 218. Therefore, any component elements in FIG. 12 that function in similar manners to their counterparts in FIG. 6 are denoted by like numerals, with the descriptions thereof omitted. Furthermore, the identifier assigning section 14 and the packet classification section 16 perform the same processes as their counterparts in the intra-building GW 13, and therefore descriptions thereof are omitted.

After receiving a packet Ph from a routing section 26, the front end packet classification section 17 performs a first packet classification process. In the first packet classification process, the packet classification section 17 determines which one of the identifiers AF11, AF21, AF22, and AF31 has been assigned to each received packet Ph. After this determination is made, the front end packet classification section 17 passes any packet Ph assigned with AF11 to a bandwidth monitoring section 213 as a priority packet PPh, and passes priority information PI to both the bandwidth monitoring section 213 and the identifier assigning section 14 as was the case with the front end packet classification section 225.

Furthermore, similarly to the front end packet classification section 225, the front end packet classification section 17 passes any packet Ph assigned with AF31 to the packet classification section 16 as out-of-bandwidth packets OPh.

The front end packet classification section 17 differs from the front end packet classification section 225 in that the front end packet classification section 17 passes any packet Ph assigned with either AF21 or AF22 to the bandwidth monitoring section 213 as non-priority packets NPh, and passes non-priority information NPI to both the bandwidth monitoring section 213 and the identifier assigning section 14.

As described in the first embodiment, both information about priority of each received packet and information indicating whether the packet can be forwarded within the assured bandwidth or not are mapped onto a DSCP value in the form of identifiers AF11, AF21, AF22, and AF31, thereby enabling each device on a network to determine the original priority of each received packet. Thus, if congestion occurs when packets are outputted from the inter-building GW 5 to the shared link 8 during communications from the user-privately-owned network 2 to the external network 7, it is possible to realize priority control using the original priority of each packet.

### (third embodiment)

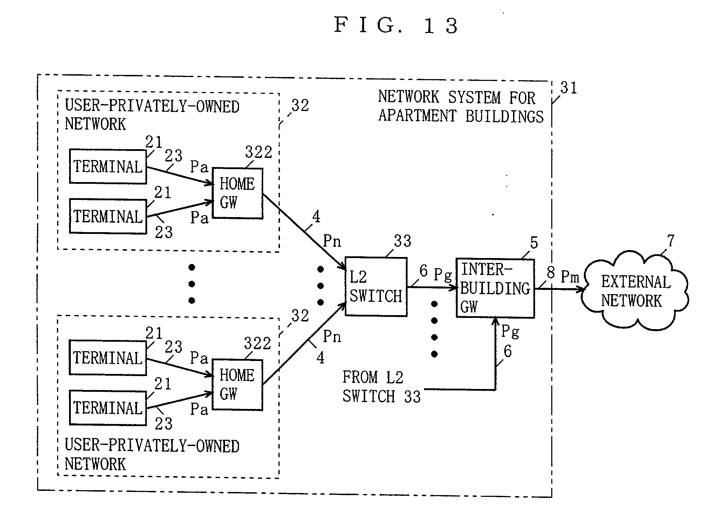

FIG. 13 is a schematic diagram illustrating an exemplary structure of a network system 31 for apartment buildings according to a third embodiment of the present embodiment. In FIG.13, the network system 31 differs from the network system 1 of FIG. 1 only in that a user-privately-owned network 32 and a Layer 2 switch (hereinafter referred to as L2 switch) 33 are provided instead of a user-privately-owned network 2 and an intra-building GW 3. Therefore, any component elements in FIG. 13 that function in similar manners to their counterparts in FIG. 1 are denoted by like numerals, with the descriptions thereof omitted. Furthermore, the user-privately-owned networks 32 and 2 differ from each other in that a home GW 322 is provided in the user-privately-owned network 32 as opposed to the home GW 22 of the user-privately-owned network 2, although both have a plurality of terminals 21 in common.

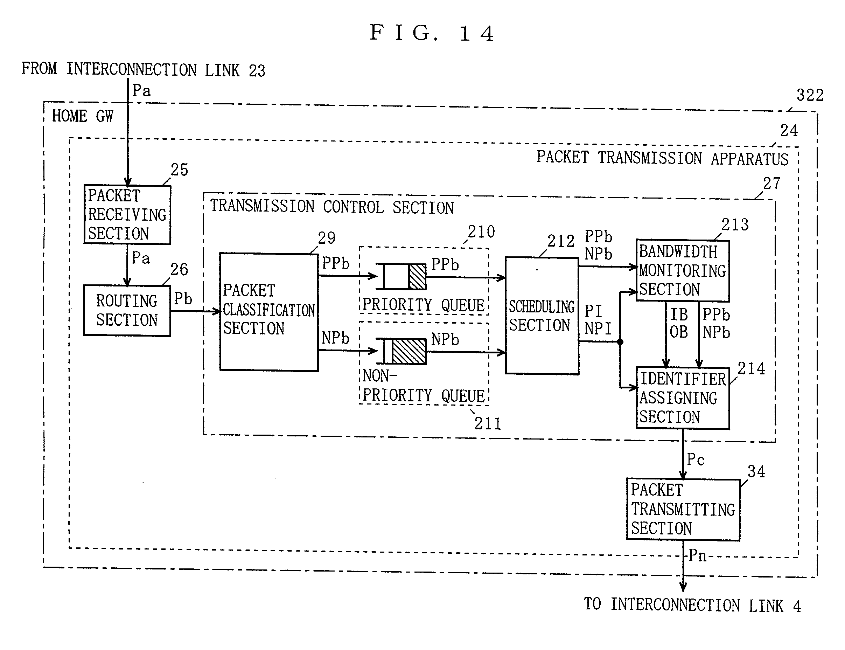

Next, the components of the network system 31 will be described in detail. FIG. 14 is a block diagram illustrating the detailed structure of the home GW 322 shown in FIG. 13. In FIG. 14, the home GW 322 differs from the above described home GW 2 only in that a packet transmitting section 34 is provided instead of a packet transmitting section 28. Therefore, any component elements in FIG. 14 that function in similar manners to their counterparts in FIG. 2 are denoted by like numerals, with the descriptions thereof omitted.

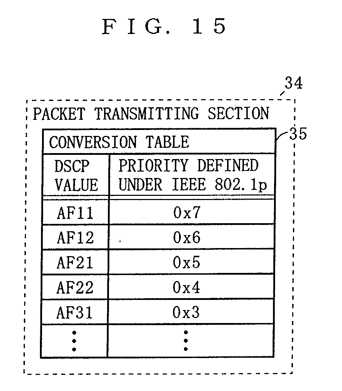

The packet transmitting section 34 receives a packet Pc from a transmission control section 27, and assembles an Ethernet frame as illustrated in FIG. 21 from the received packet Pc in accordance with IEEE 802. 1Q/p. The assembled Ethernet frame is outputted as a packet Pn to the interconnection link 4 (which is exemplary of the "output link" recited in the claims). Note that, although a packet is generally referred to as a frame in a data link layer, both the packet and the frame are protocol data units. Thus, in the present embodiment, "packets" and "frames" are employed with the same meaning. Furthermore, identifiers AF11 to AF31 assigned in the transmission control section 27 are the identifiers used in an IP layer, and therefore it is impossible to use these identifiers in the data link layer that is lower than the IP layer. Therefore, the packet transmitting section 34 uses a conversion table 35 previously stored therein to convert the identifiers AF11 to AF31 uniquely into fifth to seventh priority identifiers, respectively, which are used in the data link layer (priorities as defined under IEEE 802. 1p). FIG. 15 is a schematic diagram illustrating an exemplary structure of the conversion table 35. The conversion table 35 illustrated in FIG. 15 dictates that AF11 is converted into the fifth priority identifier 0x7; AF21 is converted into the sixth priority identifier 0x5; and AF31 is converted into the seventh priority identifier 0x3. The packet transmitting section 34 assembles an Ethernet frame by setting one of the aforementioned fifth to seventh priority identifiers in the priority field as defined under IEEE 802. 1Q/p, and outputs the Ethernet frame as a packet Pn. The outputted packet Pn is transferred over the interconnection link 4, and received by the L2 switch 33.

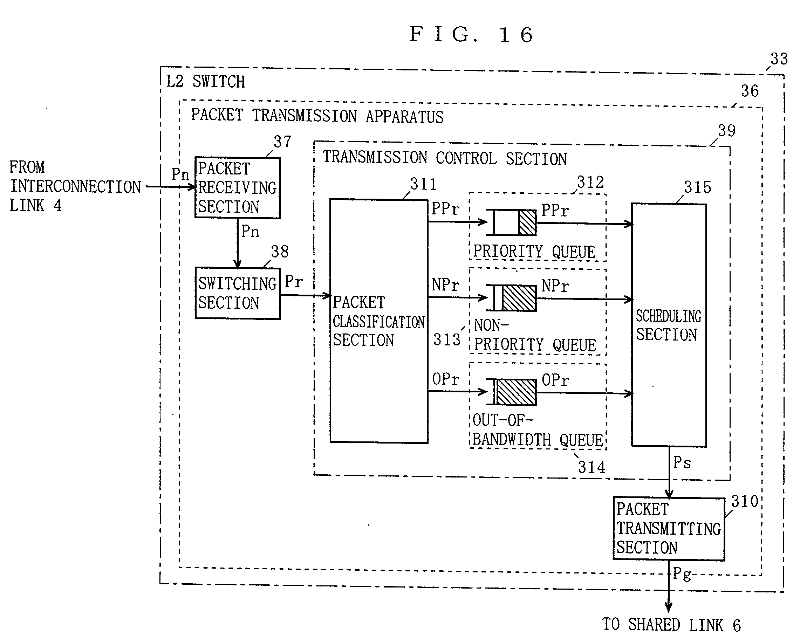

FIG. 16 is a block diagram illustrating the detailed structure of the L2 switch 33 shown in FIG. 13. In FIG. 13, the L2 switch 33 includes a packet transmission apparatus 36, which comprises a packet receiving section 37, a switching section 38, a transmission control section 39, and a packet transmitting section 310.

Referring to FIG. 16, the packet receiving section 37 receives the packet Pn transferred over the interconnection link 4 (which is exemplary of the "first link" recited in the claims), and passes the received packet Pn to the switching section 38. The switching section 38 changes a destination IP address (see FIG. 21) of the packet Pn passed from the packet receiving section 37, and passes the processed packet Pn to the transmission control section 39 as a packet Pr.

The transmission control section 39 performs transmission control for each received packet Pr. In order to perform this transmission control as shown in FIG. 16, the transmission control section 39 includes a packet classification section 311, a priority queue 312, a non-priority queue 313, an out-of-bandwidth queue 314, and a scheduling section 315.

The packet classification section 311 receives the packet Pr from the switching section 38, and performs the same packet classification process as that performed by the packet classification section 218. The packet classification section 311 determines which one of the identifiers 0x7, 0x5, and 0x3 has been assigned to each received packet Pr. After this determination is made, the packet classification section 311 adds any packet assigned with 0x7 to the priority queue 312 as a priority packet PPr, any packet assigned with 0x5 to the non-priority queue 313 as a non-priority packet NPr, and any packet assigned with 0x3 to the out-of-bandwidth queue 314 as an out-of-bandwidth packet OPr.

The scheduling section 315 starts operating according to a predetermined timing, similarly to the scheduling section 222, in accordance with PQ (Priority Queuing) to pass one of a priority packet PPr, a non-priority packet NPr, and an out-of-bandwidth packet OPr extracted from the priority queue 312, the non-priority queue 313, and the out-of-bandwidth queue 314, respectively, as a packet Ps to the packet transmitting section 310. The scheduling section 315 performs a process which is similarly derivable from that performed at the scheduling section 222, and therefore the descriptions thereof are omitted.

As described in the first embodiment, with the above described process, packets PPr and NPr are prevented from stagnantly staying in the priority queue 312 and the non-priority queue 313, respectively. As a result, any packets classified as a priority packet PPb at the home GW 322 are forwarded with a minimum delay to the receiving end. Furthermore, it is possible to minimize delay jitter of the priority packets PPb.

The packet transmitting section 310 receives the packet Ps, and disassembles the received packet Ps in accordance with an IP into a packet Pg of a format shown in either FIG. 17 or FIG. 18, and outputs the packet Pg to the shared link 6 (which is exemplary of the "second link" recited in the claims) . The outputted packet Pg is transferred over the shared link 6, and received by the inter-building GW 5.

As described above, according to the present embodiment, the first to third identifiers in the IP layer are each mapped onto the fifth to seventh priorities in the data link layer (i.e., lower layer). Thus, it is possible to realize priority control in the data link layer.

In the third embodiment, the packet transmitting section 34 converts AF11, AF21, and AF31 into 0x7, 0x5, and 0x3, respectively. However, the present invention is not limited to these three types of priority. Four types of identifiers, i.e., AF11, AF21, AF22, and AF31 may be mapped onto four priorities of the data link layer, or any greater number of identifiers may be mapped onto a corresponding number of priorities in the data link layer.

While the invention has been described in detail, the foregoing description is in all aspects illustrative and not restrictive. It is understood that numerous other modifications and variations can be devised without departing from the scope of the invention.

## Claims

1. A packet transmission apparatus (24, 223) for performing a predetermined process on packets transferred over a plurality of input links (23, 6), and outputting the packets to an output link (4, 8), comprising:
an identifier assigning section (214, 14) for, after receiving a packet transferred over each input link, assigning one of first to third identifiers to the received packet, wherein
the first identifier indicates that the packet has a relatively high priority and does not exceed an assured bandwidth which is determined with a predetermined method,
the second identifier indicates that the packet has a relatively low priority and does not exceed the assured bandwidth, and
the third identifier at least indicates that the packet exceeds the assured bandwidth,
the packet transmission apparatus further comprising:
a packet transmitting section (28,34) for performing a necessary process on the packet assigned with one of the first to third identifiers by the identifier assigning section, and outputting the processed packet to the output link.

2. The packet transmission apparatus according to claim 1, further comprising:
a priority queue (210);
a non-priority queue (211);
a packet classification section (29) for, after receiving a packet transferred over each input link, performing a predetermined packet classification process to add the received packet to either the priority queue or the non-priority queue; and
a scheduling section (212) for extracting a packet from the priority queue or from the non-priority queue according to a predetermined timing, with a higher priority being given to the priority queue over the non-priority queue,
the scheduling section being operative to:
when the packet is extracted from the priority queue, generate priority information indicating that the extracted packet has a high priority; and
when the packet is extracted from the non-priority queue, generate non-priority information that indicating that the extracted packet has a low priority,
the packet transmission apparatus further comprising:
a bandwidth monitoring section (213) for determining whether a bandwidth of each packet transferred from the scheduling section exceeds the assured bandwidth or not based on the priority information or the non-priority information generated in the scheduling section,
wherein
the bandwidth monitoring section is operative to:
generate in-assured bandwidth information when the bandwidth of the packet does not exceed the assured bandwidth; and
generate out-of-assured bandwidth information when the bandwidth of the packet exceeds the assured bandwidth,
wherein
the identifier assigning section selects one of the first to third identifiers based on a combination of either the priority information or the non-priority information generated in the scheduling section and either the in-assured bandwidth information or the out-of-assured bandwidth information generated in the bandwidth monitoring section, and assigns the selected identifier to the packet transferred from the bandwidth monitoring section.

3. The packet transmission apparatus according to claim 2, wherein
the bandwidth monitoring section comprises a token bucket (215) having a predetermined depth, in which tokens are accumulated at a rate corresponding to the assured bandwidth,
the bandwidth monitoring section is operative to:
when the priority information is received from the scheduling section, determine whether an amount of tokens corresponding to a length of the packet received from the scheduling section has been accumulated, and generate in-assured bandwidth information if the corresponding amount of tokens has been accumulated, or generate out-of-assured bandwidth information if the corresponding amount of tokens has not been accumulated; and
when the non-priority information is received from the scheduling section, determine whether an amount of tokens corresponding to the length of the packet received from the scheduling section has been accumulated to a level equal to or greater than a threshold value that is smaller than the predetermined depth, and generate in-assured bandwidth information if the corresponding amount of tokens has been accumulated, or generate out-of-assured bandwidth information if the corresponding amount of tokens has not been accumulated.

4. The packet transmission apparatus according to claim 1, wherein
the identifier assigning section assigns the first identifier to the packet received from the bandwidth monitoring section if the priority information is received from the scheduling section and in-bandwidth information is received from the bandwidth monitoring section,
the identifier assigning section assigns the second identifier to the packet received from the bandwidth monitoring section if the non-priority information is received from the scheduling section and in-bandwidth information is received from the bandwidth monitoring section, and
the identifier assigning section assigns the third identifier to the packet received from the bandwidth monitoring section if the priority information is received from the scheduling section and the out-of-bandwidth information is received from the bandwidth monitoring section.

5. The packet transmission apparatus according to claim 4, wherein
the identifier assigning section (214) further assigns the third identifier to the packet received from the bandwidth monitoring section if the non-priority information is received from the scheduling section and the out-of-bandwidth information is received from the bandwidth monitoring section.

6. The packet transmission apparatus (223) according to claim 1, further comprising a front end packet classification section (224) for determining which one of the first to third identifiers is assigned to each packet transferred over the respective input link and classifying the packet as: a packet assigned with one of the first identifier and the second identifier; or a packet assigned with the third identifier, wherein
the front end packet classification section is operative to:
if it is determined that the packet has been assigned with the first identifier, generate priority information indicating that the received packet has a high priority; and
if it is determined that the packet has been assigned with the second identifier, generate non-priority information indicating that the received packet has a low priority,
the packet transmission apparatus further comprising a bandwidth monitoring section (213) for determining whether a bandwidth of each packet transferred from the front end packet classification section exceeds the assured bandwidth or not by using either the priority information or the non-priority information generated in the front end packet classification section, wherein
the bandwidth monitoring section generates:
the in-assured bandwidth information if the bandwidth of the currently-received packet does not exceed the assured bandwidth; and
the out-of-assured bandwidth information when the bandwidth of the currently-received packet exceeds the assured bandwidth,
the identifier assigning section for selecting one of the first to third identifiers based on a combination of either the priority information or the non-priority information generated in the front end packet classification section and either the in-assured bandwidth information or the out-of-assured bandwidth information generated in the bandwidth monitoring section, and assigning the selected identifier to the packet transferred from the bandwidth monitoring section.

7. The packet transmission apparatus (223) according to claim 6, further comprising:
a priority queue (219) ;
a non-priority queue (220) ;
an out-of-bandwidth queue (221); and
a packet classification section (218) for performing a predetermined packet classification process after receiving a packet from either the identifier assigning section or the front end packet classification section, wherein
the packet classification section determines which one of the first to third identifiers has been assigned to the received packet, and adds each packet assigned with the first identifier to the priority queue, each packet assigned with the second identifier to the non-priority queue, and each packet assigned with the third identifier to the out-of-bandwidth queue, and
the packet transmission apparatus (223) further comprising a scheduling section (222) for, according to a predetermined timing, extracting a packet from one of the priority queue, the non-priority queue, and the out-of-bandwidth queue in descending order of priorities, and passing the extracted packet to the packet transmitting section, wherein the priorities in descending order are from the priority queue to the non-priority queue to the out-of-bandwidth queue.

8. The packet transmission apparatus according to claim 4, wherein
the identifier assigning section (14) further assigns a fourth identifier to the packet received from the bandwidth monitoring section if the non-priority information is received from the scheduling section and the out-of-bandwidth information is received from the bandwidth monitoring section,
the third identifier indicates that the packet has a relatively high priority and exceeds the assured bandwidth, and
the fourth identifier indicates that the packet has a relatively low priority and exceeds the assured bandwidth.

9. The packet transmission apparatus (223) according to claim 8, further comprising a front end packet classification section (224) for determining which one of the first to fourth identifiers has been assigned to the respective packet transferred over each input link and classifying the packet as: a packet assigned with one of the first identifier, the second identifier, and the fourth identifier; or a packet assigned with the third identifier, wherein
the front end packet classification section is operative to:
if it is determined that the packet has been assigned with the first identifier, generate priority information indicating that the received packet has a high priority; and
if it is determined that the packet has been assigned with either the second identifier or the fourth identifier, generate non-priority information indicating that the received packet has a low priority,
the packet transmission apparatus further comprising a bandwidth monitoring section (213) for determining whether a bandwidth of the packet transferred from the front end packet classification section exceeds the assured bandwidth or not by using either the priority information or the non-priority information generated in the front end packet classification section, wherein
the bandwidth monitoring section generates:
in-assured bandwidth information when the bandwidth of the received packet does not exceed the assured bandwidth; and
out-of-assured bandwidth information if the bandwidth of the received packet exceeds the assured bandwidth,
the identifier assigning section for selecting one of the first to fourth identifiers based on a combination of either the priority information or the non-priority information generated in the front end packet classification section and either the in-assured bandwidth information or the out-of-assured bandwidth information generated in the bandwidth monitoring section, and assigning the selected identifier to the packet transferred from the bandwidth monitoring section.

10. The packet transmission apparatus (223) according to claim 9, further comprising:
a priority queue (219);
a non-priority queue (220);
an out-of-bandwidth queue (221); and
a packet classification section (218) for performing a predetermined packet classification process after receiving a packet from either the identifier assigning section or the front end packet classification section, wherein
the packet classification section determines which one of the first to fourth identifiers has been assigned to the received packet, and adds each packet assigned with the first identifier to the priority queue, each packet assigned with either the second identifier or the fourth identifier to the non-priority queue, and each packet assigned with the third identifier to the out-of-bandwidth queue,
the packet transmission apparatus (223) further comprising a scheduling section (222) for, according to a predetermined timing, extracting a packet from one of the priority queue, the non-priority queue, and the out-of-bandwidth queue in descending order of priorities, and passing the extracted packet to the packet transmitting section, wherein the priorities in descending order are from the priority queue to the non-priority queue to the out-of-bandwidth queue.

11. The packet transmission apparatus according to claim 1, wherein
the packet transmitting section (34) converts one of the first to third identifiers assigned to the packet by the identifier assigning section into one of fourth to sixth identifiers used in a lower layer in accordance with a conversion table (35) previously stored therein, and
the packet transmitting section assembles a frame in the lower layer so as to include one of the fourth, fifth, and sixth identifiers by using the packet transferred from the identifier assigning section, and outputs the assembled frame to the output link.

12. The packet transmission apparatus according to claim 1, wherein
the assured bandwidth is determined based on a bandwidth of the output link and the number of said input links.

13. The packet transmission apparatus according to claim 12, wherein
the assured bandwidth is a quotient found by dividing the bandwidth of the output link by the number of the input links.

14. The packet transmission apparatus according to claim 1, wherein
the identifier assigning section assigns the first identifier to each packet contained in a CBR (Constant Bit Rate) traffic.

15. A packet transmission method (24, 223) for processing packets transferred over a plurality of input links (23, 6), and outputting the packets to an output link (4, 8), comprising:
an identifier assigning step (214, 14) of, after receiving a packet transferred over each input link, assigning one of first, second, and third identifiers to the received packet, wherein
the first identifier indicates that the packet has a relatively high priority and does not exceed an assured bandwidth determined with a predetermined method,
the second identifier indicates that the packet has a relatively low priority and does not exceed the assured bandwidth, and
the third identifier at least indicates that the packet exceeds the assured bandwidth, and
the packet transmission method further comprising:
a packet transmitting step (28,34) of performing a necessary process on the packet assigned with one of the first, second, and third identifiers in the identifier assigning step, and outputting the processed packet to the output link.

16. A packet transmission apparatus (216, 36) for performing a predetermined process on packets generated in a plurality of previous packet transmission apparatuses (24, 223), and transferred over a plurality of first links (4) to the packet transmission apparatus, and outputting the processed packets to a second link (6), wherein
the previous transmission apparatuses each assign at least one of first to third identifiers for each input packet, wherein
the first identifier indicates that the packet has a relatively high priority and does not exceed an assured bandwidth determined with a predetermined method,
the second identifier indicates that the packet has a relatively low priority and does not exceed the assured bandwidth, and
the third identifier at least indicates that the packet exceeds the assured bandwidth,
the previous transmission apparatuses each further perform a necessary process on the packet assigned with one of the first to third identifiers, and output the processed packet to the respective first link,
the packet transmission apparatus comprising:
a priority queue (219, 312);
a non-priority queue (220, 313);
an out-of-bandwidth queue (221, 314); and
a packet classification section (218, 16, 311) for, after receiving a packet transferred over the first link, performing a packet classification process to determine which one of the first to third identifiers has been assigned to the received packet, and adding each packet assigned with the first identifier to the priority queue, each packet assigned with the second identifier to the non-priority queue, and each packet assigned with the third identifier to the out-of-bandwidth queue;
a scheduling section (222, 315) for, according to a predetermined timing, extracting a packet from one of the priority queue, the non-priority queue, and the out-of-bandwidth queue in descending order of priorities, wherein the priorities in descending order are from the priority queue to the non-priority queue to the out-of-bandwidth queue; and
a packet transmitting section (28, 310) for performing a necessary process on the packet extracted from the scheduling section, and outputting the processed packet to the second link.

17. The packet transmission apparatus according to claim 16, wherein
the previous packet transmitting apparatuses each assign one of first to fourth identifiers for each input packet, wherein
the first identifier indicates that the packet has a relatively high priority and does not exceed an assured bandwidth determined with a predetermined method,
the second identifier indicates that the packet has a relatively low priority and does not exceed the assured bandwidth,
the third identifier indicates that the packet has a relatively high priority and exceeds the assured bandwidth, and
the fourth identifier indicates that the packet has a relatively low priority and exceeds the assured bandwidth, and
the previous transmission apparatuses each further perform a necessary process on the packet assigned with one of the first to fourth identifiers, and output the processed packet to the respective first link,
the packet classification section (16) further comprises a first reference value and a second reference value which is smaller than the first reference value, and
the packet classification section is operative to:
after receiving a packet assigned with the second identifier, discard the received packet if a current amount of packets accumulated in the non-priority queue exceeds the first reference value; and
after receiving a packet assigned with the fourth identifier, discard the received packet if the current amount of packets accumulated in the non-priority queue exceeds the second reference value.

18. The packet transmission apparatus according to claim 16, wherein
the previous packet transmitting apparatuses each assign one of first to fourth identifiers to each input packet, wherein
the first identifier indicates that the packet has a relatively high priority and does not exceed an assured bandwidth determined with a predetermined method,
the second identifier indicates that the packet has a relatively low priority and does not exceed the assured bandwidth,
the third identifier indicates that the packet has a relatively high priority and exceeds the assured bandwidth, and
the fourth identifier indicates that the packet has a relatively low priority and exceeds the assured bandwidth,
the previous transmission apparatuses each further perform a necessary process on the packet assigned with one of the first to fourth identifiers, and output the processed packet to the respective first link,
the packet classification section (16) further comprises a first discard probability and a second discard probability which has a higher probability than the first probability, and
the packet classification section is operative to:
after receiving a packet assigned with the second identifier, discard the received packet in accordance the first discard probability; and
after receiving a packet assigned with the fourth identifier, discard the received packet in accordance with the second discard probability.

19. A packet transmission method (216, 36) for performing a predetermined process on packets generated in a plurality of packet transmission apparatuses (24, 223), and transferred over a plurality of first links (4), and outputting the processed packets to a second link (6), wherein
the packet transmission apparatuses each assign at least one of first to third identifiers to each input packet, wherein
the first identifier indicates that the packet has a relatively high priority and does not exceed an assured bandwidth determined with a predetermined method,
the second identifier indicates that the packet has a relatively low priority and does not exceed the assured bandwidth, and
the third identifier at least indicates that the packet exceeds the assured bandwidth, and
the previous transmission apparatuses each further perform a necessary process on the packet assigned with one of the first to third identifiers, and output the processed packet to the respective first link,
the packet transmission method comprising:
a packet classification step (218, 16, 311) of, after receiving a packet transferred over the first link, performing a packet classification process to determine which one of the first to third identifiers has been assigned to the received packet and adding each packet assigned with the first identifier to the priority queue, each packet assigned with the second identifier to the non-priority queue, and each packet assigned with the third identifier to the out-of-bandwidth queue;
a scheduling step (222, 315) of, according to a predetermined timing, extracting a packet from one of the priority queue, the non-priority queue, and the out-of-bandwidth queue in descending order of priorities, wherein the priorities in descending order are from the priority queue to the non-priority queue to the out-of-bandwidth queue; and
a packet transmitting step (28, 310) of performing a necessary process on the packet extracted from the scheduling section, and outputting the processed packet to the second link.
